# EUROPEAN PATENT SPECIFICATION

(11) **EP 3 339 397 B1**
(45) Date of publication and mention of the grant of the patent: **22.04.2020**
(21) Application number: 17208733.0
(22) Date of filing: 20.12.2017
(51) Int. Cl.: C09K 21/02, E04B 1/94, C09D 5/18

(54) **FIRE-RETARDANT COMPOSITION AND MANUFACTURING PROCESS THEREOF, AND INSULATION PRODUCT COMPRISING THE FIRE-RETARDANT COMPOSITION AND MANUFACTURING PROCESS THEREOF**
FLAMMHEMMENDE ZUSAMMENSETZUNG UND HERSTELLUNGSVERFAHREN DAFÜR SOWIE EIN ISOLATIONSPRODUKT MIT DER FLAMMHEMMENDEN ZUSAMMENSETZUNG UND HERSTELLUNGSVERFAHREN DAFÜR
COMPOSITION IGNIFUGE ET SON PROCÉDÉ DE FABRICATION ET PRODUIT D'ISOLATION COMPRENANT LA COMPOSITION IGNIFUGE ET SON PROCÉDÉ DE FABRICATION

(30) Priority: 21.12.2016 FI 20166004
(43) Date of publication of application: 27.06.2018
(73) Proprietor: Paroc Group Oy, 00180 Helsinki (FI)
(72) Inventor: Fagerlund, Susanne, 20500 Turku (FI); Mattila, Hannu-Petteri, 21280 Raisio (FI)
(74) Representative: Sole, Timo

(56) References cited:
- EP-A1- 0 568 270
- EP-B1- 0 650 507
- US-A1- 2011 126 957
- US-A1- 2013 136 930
- US-A1- 2014 242 307

## Description

### Object of the invention

The first object of the invention is a fire-retardant composition according to claim 1.

The second object of the invention is a manufacturing process of the first fire-retardant composition.

The third object of the invention is a mineral wool-based insulation product having at least one mineral wool-based layer and at least one layer of above said fire-retardant compositions or a fire-retardant composition manufactured using the above said process and hardened due to the evaporation of water contained in the fire-retardant composition.

The fourth object of the invention is a manufacturing process of the above said mineral wool-based insulation product.

### Prior art

From WO2013/057496 and US 2014/024307 A1 is known a precursor of a fire retardant, which contains cement in an amount of 10-30 percentage by weight and aluminium or magnesium hydroxide, huntite or hydromagnesite in an amount of 60-90 percentage by weight, and which is mixed with water or some other aqueous substance into a wet material (mortar), which hardens, or into a dry material.

Calcium aluminate cement can be used in a precursor as a hardening agent (2-5 percentage by weight) as it speeds the hardening of the fire retardant. From WO2013/057496 or US 2014/024307 A1 is, however, not known a combination of huntite and hydromagnesite, the use of colloidal silica, nor thus even a combination of huntite and/or hydromagnesite and colloidal silica.

From US5389716 is known a fireproof cured binder composition for fibrous mats, which contains a fireproof latex and a polymer-based thermosetting resin, specifically a stable mixture of urea-aldehyde thermosetting resin, which can optionally contain aqueous silica colloid, which can be cationic. The amount of colloidal silica in relation to the weight of the resin is preferably approximately 0.1 - approximately 10%, more preferably approximately 0.1 - approx. 5%.

The binder composition according to US5389716 is a liquid binder composition suitable for impregnating and coating fibrous mats, using which it is not possible to achieve an easily applied fire-retardant composition and in which are additionally used two organic ingredients. From the binder composition is not known the use of huntite, hydromagnesite or their combination.

From WO 2011/133778 is also known the use of colloidal silica in an inorganic binder of an insulation material. From the publication is, however, not known the use of huntite, hydromagnesite or their combination.

From US 2011/126957 A1 is known the use of multilayer fire protection material composition comprising colloidal silica in 4.5 wt.% and magnesia silica in 89.5 wt.%. From the publication is, however, not known the use of huntite, hydromagnesite or their combination.

There is a need to improve the fire-retardancy of mineral wool-based insulation products with an easily applied fire-retardant composition having good mechanical properties (impact strength etc.) and reasonable material expenses.

### Description of the invention

To satisfy the requirements of prior art, the first fire-retardant composition according to the invention is characterized in that it contains
- colloidal silica as a binder
- a combination of huntite (Mg₃Ca(CO₃)₄) and hydromagnesite (Mg₅(CO₃)₄(OH)₂·4H₂O) as a fire retardant,
- mineral wool fibres, and
- water,
wherein, in relation to the total weight of the composition, colloidal silica is present from 1 to 50 percentage by weight, water is present from 10 to 50 percentage by weight, combination of huntite and hydromagnesite is present from 40 to 75 percentage by weight.

For the first fire-retardant composition according to the invention, it is preferred that the mineral wool fibres of the above said fire-retardant composition are calcined stone wool fibres. It is further preferred that, in the above said fire-retardant composition, cement is present as an additional binder, preferably calcium aluminate cement.

In the first fire-retardant composition according to the invention, in all of its preferred embodiments, preferably present is further dispersing agent, preferably a sodium polycarboxylate-based dispersing agent.

A process according to the invention for manufacturing the first fire-retardant composition is characterized in that, therein, the following substances are mixed together:
(a) colloidal silica,
(b) a combination of huntite (Mg₃Ca(CO₃)₄) and hydromagnesite (Mg₅(CO₃)₄(OH)₂·4H₂O),
(c) water, and
(d) mineral wool fibres.

In one preferred embodiment of a process according to the invention, the substances (a) and (b) are mixed together separately and the substances (c) and (d) separately, after which the mixture of substances (a) and (b) and the mixture of substances (c) and (d) are combined into a mixture by mixing them together. Further, it is preferred that into the mixture of substances (a) and (b) is further mixed a dispersing agent, and into the mixture of substances (c) and (d) is further mixed cement, preferably calcium aluminate cement. Further, it is also preferred that the mixture of substances (a) and (b) and the mixture of substances (c) and (d) are combined by mixing them together, immediately before use, into a fire-retardant composition in the form of a paste to be applied.

A mineral wool-based insulation product according to the invention is characterized in that it has at least one mineral wool-based layer and at least one layer of a fire-retardant composition according to any one of claims 1-4 or a fire-retardant composition manufactured by a process according to any one of claims 5-6 and hardened due to the evaporation of the water contained in the fire-retardant composition.

In one preferred embodiment of an insulation product according to the invention, each said at least one mineral wool-based layer is formed from a mineral wool slab. In one specific embodiment, the insulation product according to the invention is formed from a mineral wool slab, the other main surface of which is coated with a fire-retardant composition according to the invention. In a second embodiment, the insulation product is formed from two mineral wool slabs, both of which are at their other main surface connected to each other through the fire-retardant composition according to the invention, which is between them. In a third preferred embodiment, the insulation product is formed from three mineral wool slabs and two layers between them formed from a fire-retardant composition according to the invention, wherein the inner main surfaces of the two outer mineral wool slabs and both main surfaces of the middle mineral wool slab are connected to each other through the fire-retardant composition according to the invention, which is between them. The preferred embodiments of an insulation product according to the invention also include other so-called sandwich structures (for example, four mineral wool slabs, wherein between every two adjacent slabs is a fire-retardant layer, i.e. three fire-retardant layers in total).

A process according to the invention for manufacturing a mineral wool-based insulation product according to the invention is characterized in that, which is presented claim 10.

### Detailed description of the invention

In the following, embodiments of the invention are described in more detail by means of reference to the accompanying drawings, in which
- Fig. 1A: shows a referential mineral wool-based insulation product,
- Fig. 1B: shows another referential mineral wool-based insulation product,
- Fig. 1C: shows a preferred embodiment of a mineral wool-based insulation product according to the invention,
- Fig. 2: shows graphically the results of a fire test conducted on a mineral wool slab coated with a referential fire-retardant composition, and
- Fig. 3: shows graphically the results of a fire test conducted on a mineral wool slab coated with another preferred embodiment of a fire-retardant composition according to the invention.

From a fire-retardant composition according to the invention, three different fire-retardant compositions were manufactured, which are designated as follows: PN1, PN3, PN4. In addition, three different referential fire-retardant compositions according to the present disclosure were manufactured, which are designated as follows: PN2, PN5, PN6. The components of all fire-retardant compositions and their amounts (g) and relative amounts (percentages by weight) are shown in Table 1.

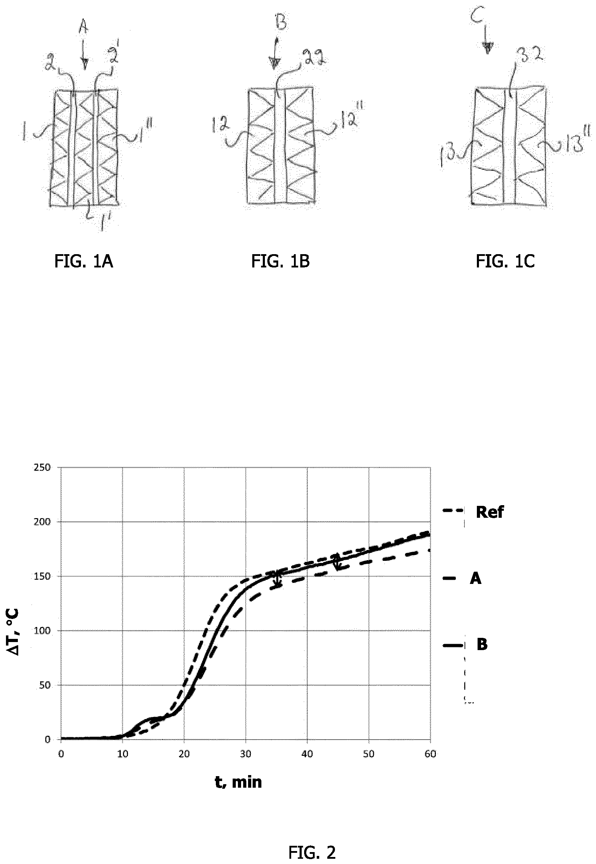

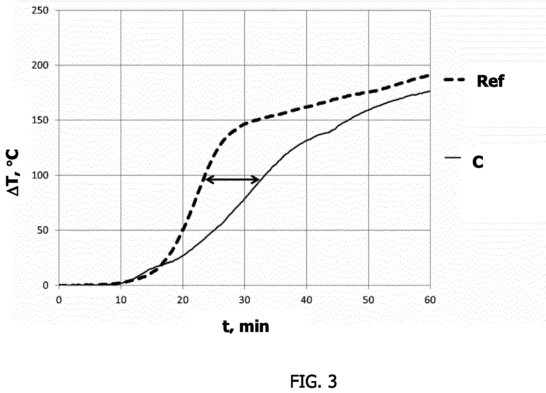

Of the manufactured compositions, only compositions PN2 and PN3 were used to manufacture the stone wool sandwich slab product A, shown in Fig. 1A, the stone wool sandwich slab product B, shown in Fig. 1B, and the stone wool sandwich slab product C, shown in Fig. 1C, on each of which were conducted fire tests. The fire test results of products A and B are shown in Fig. 2 and the fire test results of product C in Fig. 3.

**Table 1**

| Component* | PN1 | PN2 | PN3 | PN4 | PN5 | PN6 |
|---|---|---|---|---|---|---|
| Colloidal silica⁽¹⁾ | 500 g | 375 g | 250 g | | 250 g | 250 g |
| | (22 wt%) | (38.5 wt%) | (17.1 wt%) | | (38 wt%) | (41 wt%) |
| Water | 500 g | 375 g | 250 g | 500 g | 250 g | 250 g |
| | (22 wt%) | (38.5 wt%) | (17.1 wt%) | (34.2 wt%) | (38 wt%) | (41 wt%) |
| Huntite and hydromagnesite mixture ⁽²⁾ | 1000 g | | 750 g | 750 g | | |
| | (45 wt%) | | (51.3 wt%) | (51.3 wt%) | | |
| Sodium polycarboxylate-based dispersing agent, 45% in water ⁽³⁾ | 40 g | | 28 g | 28 g | n. 5 g | n. 10 g |
| | (2 wt%) | | (1.9 wt%) | (1.9 wt%) | (n. 0.1 wt%) | (n. 0.02 wt%) |
| Calcined stone wool fibre | 200 g | | 100 g | 100 g | | |
| | (9 wt%) | | (6.8 wt%) | (6.8 wt%) | | |
| Powdered vermiculite | | 225 g | | | | |
| | | (23.1 wt%) | | | | |
| Non-powdered vermiculite | | | | | 150 g | 100 g |
| | | | | | (23 wt%) | (16 wt%) |
| Calcium aluminate cement ⁽⁴⁾ | | | 85 g | 85 g | | |
| | | | (5.8 wt%) | (5.8 wt%) | | |
| **Total weight** | **2240 g** | **975 g** | **1463 g** | **1463 g** | **approx. 655 g** | **approx. 610 g** |

| | | | | | | |
|---|---|---|---|---|---|---|
| * the trade names and manufacturers (manufacturers in parentheses) of components marked by reference numerals are presented here: ⁽¹⁾Lythic 1 Day (Lythic solutions), ⁽²⁾UltraCarb LH-15 (LKAB Minerals), ⁽³⁾Cliqsperse 172 (CLiQ Swiss Tech AG) and ⁽⁴⁾CA-14 M (Almatis B.V.) | | | | | | |

### EXAMPLE 1: FIRE-RETARDANT COMPOSITION PN2

### Manufacture of a fire-retardant composition PN2

In the manufacture of the fire-retardant composition PN2, the three components thereof, colloidal silica, water and powdered vermiculite, are combined with each other by mixing them together. The order, in which the components are mixed, is not significant. In the manufacture of composition PN2 were used the amounts given in Table 1.

### Manufacture of stone wool slab products treated with a fire-retardant composition PN2

Two different stone wool slab products treated with a fire-retardant composition PN2 are manufactured, products A and B (see Fig. 1A and correspondingly Fig. 1B).

Product A, shown in Fig. 1A, is manufactured such that onto the other main side of the first 20 mm thick stone wool slab 1 is applied (still moist) fire-retardant composition PN2 in a paste-like form as one layer 2, after which to this still moist fire-retardant composition layer 2 is connected a second slab that is the same kind of 20 mm thick stone wool slab 1' as the first slab. Onto the outer main side of this second stone wool slab 1' is applied (or has already been applied) (still moist) fire-retardant composition (PN2), again in a paste-like form, as a (second) layer 2' substantially of the same thickness as the above said first PN2 layer 2. To this still moist second PN2 layer 2' of the fire-retardant composition is connected a third 20 mm thick stone wool slab 1" that is the same kind as the previous slabs. The thus obtained product A comprising three stone wool slab layers 1, 1', 1" and two PN2 layers 2, 2' is allowed to dry for a few days at room temperature.

Product B, shown in Fig. 1B, is manufactured such that the fire-retardant composition PN2 is applied as one layer 22 between two similar 30 mm thick stone wool slabs 12 and 12" in an equivalent manner to that in the above description of the manufacture of product A. The application of the fire-retardant composition PN2 to the surface of the stone wool slab is performed with suitable means, for example, with a brush in the manner of paint. The fire-retardant stone wool slab product B, shown in Fig. 1B, is then formed from two stone wool slab layers 12 and 12", as well as the dried fire-retardant composition layer 22 between them.

### Fire tests of stone wool slab products treated with a fire-retardant composition PN2 and the interpretation of test results

Fire tests were conducted on the reference product and on products A and B manufactured by the process described above. For the reference product and products A and B, thickness, density and shrinkage values in the fire test are given below. The reference product is formed from only a stone wool slab without a fire-retardant composition layer. The fire test results are graphically shown in Fig. 2 as the increase in temperature (ΔT) in relation to time (t).

Reference product (Ref): Thickness 61.8 mm, density 96.8 kg/m³. Maximal shrinkage in the fire test 0%. Presented as curve **Ref** in Fig. 2.

Product A: Two fire-retardant composition-comprising PN2 layers 2, 2', 200 g + 200 g wet weight. Three stone wool slab layers 1, 1', 1", of which each layer is 20 mm thick (PN2 layer 2 is between the stone wool slabs 1 and 1', and PN2 layer 2' is between the stone wool slabs 1' and 1", see Fig. 1A). Total thickness of A: 62.3 mm. Total density of A: 99.1 kg/m³. Maximal shrinkage in the fire test: 3.7% on the average. Presented as curve **A** in Fig. 2.

Product B: One fire-retardant composition comprising PN2 layer 22, 330 g wet weight. Two stone wool slab layers 12, 12", each 30 mm thick, between which is the PN2 layer 22 (see Fig. 1B). Total thickness of B: 62.6 mm. Total density of B: 94.2 kg/m³. Maximal shrinkage in the fire test: 5.0% on the average. Presented as curve B in Fig. 2.

Interpretation: On the basis of the fire test results shown in Fig. 2, it can be seen that the fire-retardant effect of the products A and B treated with a fire-retardant composition PN2, as tested by a fire curve A according to the fire test standard EN 1363-1, paragraph 5.1.1, is better than that of the reference product after approx. 20 min.

### EXAMPLE 2: FIRE-RETARDANT COMPOSITION PN3

### Manufacture of a fire-retardant composition PN3

The fire-retardant composition PN3 is manufactured in two stages. In the first stage, colloidal silica (Lythic 1 Day manufactured by the corporation Lythic solutions), a huntite and hydromagnesite mixture (UltraCarb LH-15 manufactured by the corporation LKAB Minerals) and a sodium polycarboxylate-based dispersing agent (45% in water) (Cliqsperse 172 manufactured by the corporation CLiQ Swiss Tech AG) are combined by mixing together into their own solution, and water, calcium aluminate cement (CA-14 M manufactured by the corporation Almatis B.V.) and calcined stone wool fibres into their own. These mixtures are combined immediately before use, primarily because colloidal silica reacts chemically with both calcium aluminate cement as well as stone wool fibres and hardens quite quickly.

### Manufacture of a stone wool product treated with a fire-retardant composition PN3

A stone wool slab product C treated with a fire-retardant composition PN3 and shown in Fig. 1C is manufactured such that onto the second main side of the second stone wool slab 13 is applied (still moist) fire-retardant composition PN3 in a paste-like form as one layer 32, to which is connected a second similar stone wool slab 13", after which the layer 32 composed of fire-retardant composition PN3 between the stone wool slabs 13, 13" is allowed to dry for several days at room temperature. The application of the fire-retardant composition PN3 to the surface of the stone wool slab is performed with suitable means, for example, with a brush in the manner of paint.

### Fire test of a stone wool slab product coated with a fire-retardant composition PN3 and the interpretation of test results

Fire tests were conducted on the reference product and on product C manufactured by the process described above. For the reference product and product C, thickness, density and shrinkage values in the fire test are given below. The reference product is formed from only a stone wool slab without a fire-retardant composition layer.

The fire test results are graphically shown in Fig. 3 as the increase in temperature (ΔT) in relation to time (t).

Reference product (Ref): Thickness 61.8 mm, density 96.8 kg/m³. Maximal shrinkage in the fire test 0%. Presented as curve **Ref** in Fig. 3.

Product C: One layer 32 of fire-retardant composition PN3, 700 g wet weight. Two stone wool slab layers 13, 13", each layer 30 mm thick, between which the PN3-layer 32 (see Fig. 1C). Total thickness of C: 63.8 mm. Total density of C3: 108.6 kg/m³. Maximal shrinkage in the fire test: 5.2%. Presented as curve **C** in Fig. 3.

Interpretation: On the basis of the fire test results shown in Fig. 3, it can be seen that the fire-retardant effect of the product C treated with a fire-retardant composition PN3, as tested by a fire curve A according to the fire test standard EN 1363-1, paragraph 5.1.1, is better than that of the reference product after approx. 20 min. The product C according to the invention performs better in the fire test than the reference product due to the slowing effect on temperature increase caused by the endothermic reactions of the fire retardants contained in the composition PN3.

### Discussion regarding fire-retardant compositions PN2 and PN3

With the tested fire-retardant compositions PN2 and PN3, an improvement in combustion properties is achieved with relatively small increases in weight. The heavier additive layer (PN3) provides more benefit than the lighter additive layer (PN2). By combining different additives, it is possible to influence different portions of the fire curve in a different manner. The fire-retardant compositions of the invention are easily applied onto the surface of stone wool slabs. The material costs of the fire-retardant compositions according to the invention are reasonable.

The fire retardants of the tested fire-retardant compositions are previously known for their fire-retardant properties.

Using the fire-retardant composition PN2
- A flexible layer can be manufactured (for example, on top of a fibreglass mesh/blanket) separately and this layer can be added between prepared wool slabs
- The fire-retardant composition can be applied in the manner of paint to the surface of wool slabs
- A thin, flexible layer is generally created

The fire-retardant effect mechanisms created by the fire-retardant composition PN2 are based on that the vermiculite used as a fire retardant
- swells
- releases water and
- changes the propagation of heat radiation through the insulation.

Using the fire-retardant composition PN3
- More paste-like (stiffer, more viscous) structure than PN2 can be applied to the surface of wool slabs
- A thicker, stiffer coating than PN2 is generally created

The fire-retardant effect mechanisms created by the fire-retardant composition PN3 are based on the effect mechanism of the huntite and hydromagnesite combination (mixture) it contains as fire retardants. The trade name of the huntite and hydromagnesite combination in question is Ultracarb and its chemical formula is Mg₃Ca(CO₃)₄/Mg₅(CO₃)₄(OH)₂·4H₂O. The basis for the fire-retardant effect of this combination is the endothermic reaction created during the release of water and carbon dioxide, as well as that the carbon dioxide/water steam displaces oxygen from the combustion air and slows combustion. The latter effect is highlighted specifically in closed spaces, such as fire doors, coated insulations of ventilation ducts etc. This substance combination is known per se for its fire-retardant properties.

As a binder in the fire-retardant composition PN3 is used colloidal silica, into which is added calcium aluminate cement and calcined stone wool fibres. Only cement binder (PN4) would be heavier and/or more brittle. Likewise, only colloidal silica (PN1) would probably not be capable of binding an adequate amount of Ultracarb. Stone wool fibres have been observed to react chemically with colloidal silica, wherein the strengthening effect of the mechanical properties (impact strength etc.) of the fibres is increased.

The above-described examples of preferred embodiments of the invention may not be interpreted as limiting the scope of the following claims.

## Claims

1. Fire-retardant composition containing
- colloidal silica as a binder
- a combination of huntite (Mg₃Ca(CO₃)₄) and hydromagnesite (Mg₅(CO₃)₄(OH)₂·4H₂O) as a fire retardant,
- mineral wool fibres, and
- water,
wherein, in relation to the total weight of the composition, colloidal silica is present from 1 to 50 percentage by weight, water is present from 10 to 50 percentage by weight, combination of huntite and hydromagnesite is present from 40 to 75 percentage by weight.

2. A fire-retardant composition according to claim 1, in which the mineral wool fibres are calcined stone wool fibres.

3. A fire-retardant composition according to claim 2, further having cement present as an additional binder, preferably calcium aluminate cement.

4. A fire-retardant composition according to any one of claims 1-3, in which is further present a dispersing agent, preferably a sodium polycarboxylate-based dispersing agent.

5. A process for manufacturing a fire-retardant composition according to any one of claims 1-4, in which the following substances are mixed together:
(a) colloidal silica,
(b) a combination of huntite (Mg₃Ca(CO₃)₄) and hydromagnesite (Mg₅(CO₃)₄(OH)₂·4H₂O),
(c) water, and
(d) mineral wool fibres,
in which substances (a) and (b) are mixed together separately and substances (c) and (d) separately, after which the mixture of substances (a) and (b) and the mixture of substances (c) and (d) are combined into a mixture by mixing them together, and
into the mixture of substances (a) and (b) is further mixed a dispersing agent, and into the mixture of substances (c) and (d) is further mixed cement, preferably calcium aluminate cement.

6. A process according to claim 7, in which the mixture of substances (a) and (b) and the mixture of substances (c) and (d) are combined by mixing them together, immediately before use, into a fire-retardant composition in the form of a paste to be applied.

7. Mineral wool-based insulation product having at least one mineral wool-based layer and at least one layer of a fire-retardant composition according to any one of claims 1-4 or a fire-retardant composition manufactured by a process according to any one of claims 5-6 and hardened due to the evaporation of water contained in the fire-retardant composition.

8. An insulation product according to claim 7, in which each said at least one mineral wool-based layer consists of a mineral wool slab.

9. An insulation product according to claim 8, having a sandwich structure consisting of at least two mineral wool slabs, between which is a fire-retardant composition layer.

10. A process for manufacturing a mineral wool-based insulation product according to claim 7 or 8, in which a fire-retardant composition according to any one of claims 1-4 or a fire-retardant composition manufactured by a process according to any one of claims 5-6 is applied as a paste onto at least one surface of at least one mineral wool-based layer of a mineral wool-based insulation product, and the fire-retardant composition is allowed by drying to harden onto the surface.

## Patentansprüche

1. Feuerhemmende Zusammensetzung, enthaltend
- kolloidale Kieselsäure als Bindemittel,
- eine Kombination von Huntit (Mg₃Ca(CO₃)₄) und Hydromagnesit (Mg₅(CO₃)₄(OH)₂·4H₂O) als Brandhemmstoff,
- Mineralwollefasern und
- Wasser,
wobei in Bezug auf das Gesamtgewicht der Zusammensetzung die kolloidale Kieselsäure mit einem Gewicht von 1 bis 50 Prozent vorhanden ist, Wasser ist von 10 bis 50 Gew.-% vorhanden, die Kombination von Huntit und Hydromagnesit ist mit 40 bis 75 Gew.-% vorhanden.

2. Feuerhemmende Zusammensetzung nach Anspruch 1, in der die Mineralwollefasern calcinierte Steinwollefasern sind.

3. Feuerhemmende Zusammensetzung nach Anspruch 2, die ferner Zement enthält, der als zusätzliches Bindemittel vorhanden ist, vorzugsweise Kalziumaluminatzement.

4. Feuerhemmende Zusammensetzung nach einem der Ansprüche 1-3, in der ferner ein Dispersionsmittel vorhanden ist, vorzugsweise ein Dispersionsmittel auf der Basis von Natriumpolycarboxylat.

5. Verfahren zur Herstellung einer feuerhemmenden Zusammensetzung nach einem der Ansprüche 1-4, in der die folgenden Substanzen miteinander vermischt sind:
(a) kolloidale Kieselsäure,
(b) eine Kombination von Huntit (Mg₃Ca(CO₃)₄) und Hydromagnesit (Mg₅(CO₃)₄(OH)₂·4H₂O),
(c) Wasser und
(d) Mineralwollefasern,
in der die Substanzen (a) und (b) getrennt miteinander vermischt werden, und die Substanzen (c) und (d) werden getrennt gemischt, danach wird die Mischung von Substanzen (a) und (b) und die Mischung von Substanzen (c) und (d) zu einer Mischung durch Vermischen derselben kombiniert, und
in die Mischung von Substanzen (a) und (b) wird ferner ein Dispersionsmittel eingemischt, und in die Mischung von Substanzen (c) und (d) wird ferner Zement eingemischt, vorzugsweise Kalziumaluminatzement.

6. Verfahren nach Anspruch 7, bei dem die Mischung der Substanzen (a) und (b) und die Mischung der Substanzen (c) und (d) durch Zusammenmischen derselben unmittelbar vor der Verwendung zu einer feuerhemmenden Zusammensetzung in Form einer aufzutragenden Paste kombiniert werden.

7. Isolationsprodukt auf Mineralwollbasis, das mindestens eine Schicht auf Mineralwollbasis und mindestens eine Schicht einer feuerhemmenden Zusammensetzung nach einem der Ansprüche 1-4 oder eine feuerhemmende Zusammensetzung hat, die durch ein Verfahren nach einem der Ansprüche 5-6 hergestellt und aufgrund der Verdampfung von Wasser gehärtet wird, das in der feuerhemmenden Zusammensetzung enthalten ist.

8. Isolationsprodukt nach Anspruch 7, in dem jede der genannten mindestens einen Schicht auf Mineralwollbasis aus einer Mineralwollplatte besteht.

9. Isolationsprodukt nach Anspruch 8, das eine Sandwichstruktur hat, die aus mindestens zwei Mineralwollplatten besteht, zwischen denen eine Schicht einer feuerhemmenden Zusammensetzung liegt.

10. Verfahren zur Herstellung eines Isolationsproduktes auf Mineralwollbasis nach Anspruch 7 oder 8, bei dem eine feuerhemmende Zusammensetzung nach einem der Ansprüche 1-4 oder eine feuerhemmende Zusammensetzung, die durch ein Verfahren nach einem der Ansprüche 5-6 hergestellt wurde, als Paste auf mindestens eine Oberfläche mindestens einer Schicht eines Isolationsproduktes auf Mineralwollbasis aufgetragen wird und die feuerhemmende Zusammensetzung durch Trocknen auf der Oberfläche aushärten gelassen wird.

## Revendications

1. Composition ignifuge contenant
- de la silice colloïdale comme liant,
- une combinaison de huntite (Mg₃Ca(Co₃)₄) et d'hydromagnésite (Mg₅(CO₃)₄(OH)₂·4H₂O) comme agent ignifuge,
- des fibres de laine minérale, et
- de l'eau,
dans laquelle, par rapport au poids total de la composition, la silice colloïdale est présente en un pourcentage de 1 à 50 % en poids, l'eau est présente en un pourcentage de 10 à 50 % en poids, la combinaison de huntite et d'hydromagnésite est présente en un pourcentage de 40 à 75 % en poids.

2. Composition selon la revendication 1, dans laquelle les fibres de laine minérale sont des fibres de laine de roche calcinée.

3. Composition selon la revendication 2, comportant en outre du ciment présent sous forme de liant supplémentaire, de préférence du ciment d'aluminate de calcium.

4. Composition selon l'une quelconque des revendications 1 à 3, dans laquelle est présent en outre un agent de dispersion, de préférence un agent de dispersion à base de polycarboxylate de sodium.

5. Procédé de fabrication d'une composition ignifuge selon l'une quelconque des revendications 1 à 4, dans lequel les substances suivantes sont mélangées ensemble :
(a) de la silice colloïdale,
(b) une combinaison de huntite (Mg₃Ca(CO₃)₄) et d'hydromagnésite (Mg₅(CO₃)₄(OH)₂·4H₂O),
(c) de l'eau, et
(d) des fibres de laine minérale,
dans lequel les substances (a) et (b) sont mélangées ensemble séparément et les substances (c) et (d) séparément, après quoi le mélange de substances (a) et (b) et le mélange de substances (c) et (d) sont combinés en un mélange en les mélangeant ensemble, et dans le mélange de substances (a) et (b), est en outre mélangé un agent de dispersion et, dans le mélange de substances (c) et (d), est en outre mélangé du ciment, de préférence du ciment d'aluminate de calcium.

6. Procédé selon la revendication 5, dans lequel le mélange de substances (a) et (b) et le mélange de substances (c) et (d) sont combinés en un mélange en les mélangeant ensemble, immédiatement avant usage, en une composition ignifuge sous la forme d'une pâte à appliquer.

7. Produit isolant à base de laine minérale comportant au moins une couche à base de laine minérale et au moins une couche de composition ignifuge selon l'une quelconque des revendications 1 à 4 ou une composition ignifuge fabriquée par un procédé selon l'une quelconque des revendications 5 à 6 et durcie en raison de l'évaporation d'eau contenue dans la composition ignifuge.

8. Procédé selon la revendication 7, dans lequel chaque dite au moins une couche à base de laine minérale consiste en une dalle de laine minérale.

9. Produit isolant selon la revendication 8, comportant une structure en sandwich composée d'au moins deux dalles de laine minérale entre lesquelles se trouve une couche de composition ignifuge.

10. Procédé de fabrication d'un produit isolant à base de laine minérale selon la revendication 7 ou 8, dans lequel une composition ignifuge selon l'une quelconque des revendications 1 à 4 ou une composition ignifuge fabriquée par un procédé selon l'une quelconque des revendications 5 à 6 est appliquée sous forme d'une pâte sur au moins une surface d'au moins une couche à base de laine minérale d'un produit isolant à base de laine minérale, et on laisse sécher la composition ignifuge sur la surface pour la durcir.
